Europäisches Patentamt

European Patent Office

Office européen des brevets

(11) Publication number: **0 044 563**

**A1**

(12) **EUROPEAN PATENT APPLICATION**

(21) Application number: **81105750.4**

(22) Date of filing: **21.07.81**

(51) Int. Cl.³: **G 06 F 15/347**
**G 06 F 9/34**

(30) Priority: **21.07.80 JP 98740/80**

(43) Date of publication of application:
**27.01.82 Bulletin 82/4**

(84) Designated Contracting States:
**DE FR GB**

(71) Applicant: **Hitachi, Ltd.**
**5-1, Marunouchi 1-chome**
**Chiyoda-ku Tokyo 100(JP)**

(72) Inventor: **Nagashima, Shigeo**
**1-40-27, Koyasu-cho**
**Hachioji-shi Tokyo(JP)**

(72) Inventor: **Torii, Shunichi**
**4-815-1, Nishi-Koigakubo**
**Kokubunju-shi Tokyo(JP)**

(72) Inventor: **Omoda, Koichiro**
**1140, Togawa**
**Hadano-shi Kanagawa-ken(JP)**

(74) Representative: **Strehl, Peter K.L. Schiff, Dr. A.v.**
**Füner et al,**
**Dipl. Ing. P. Strehl Dr. U. Schübel-Hopf Dipl. Ing.**
**D.Ebbinghaus Dr. Ing. D. Finck Patentanwälte**
**Mariahilfplatz 2&3**
**D-8000 München 90(DE)**

(54) **Vector processor with vector registers.**

(57) In executing a vector operation involving the number of vector elements $k$ greater than the length of a vector register $\ell$, a vector processor is provided which includes a circuit which detects the necessity for the repetition of a vector operation after $\ell$ elements have been processed by one vector instruction series, and a circuit which causes the vector instruction series to be repeatedly executed in accordance with an output of the first-mentioned circuit, thereby making it unnecessary to reexecute setup instructions a number of times.

./...

FIG. 6

## VECTOR_PROCESSOR_WITH_VECTOR_REGISTERS
### BACKGROUND OF THE INVENTION

This invention relates to a vector processor which can execute vector operations at high speed. More particularly, it relates to a vector processor which efficiently processes a vector operation involving more vector elements than those storable in each vector register.

Vector processors can be classified into the type wherein all vectors are stored in a main storage device and then operated on, for example, a vector processor STAR-100 of CDC Inc. in the U.S., and the type wherein all vectors are once transferred from a main storage device to vector registers within a processor and wherein a vector operation is executed among the vector registers, for example, a vector processor CRAY-1 of CRAY RESEARCH, Inc., in the U.S. A vector processor according to this invention adopts the latter system. An example of the control system of a vector processor with vector registers is described in detail in U.S. Patent No. 4,128,880 entitled "Computer Vector Register Processing" (Dec. 5, 1978).

In the processing of vectors (chains of data), it is known to transfer each vector from a main storage device into a respective set of vector registers in response to successive instructions. Once stored in the vector registers, logical operations may be performed on this data and the result again stored in the main storage device. However, in order to load these vectors into the vector registers from the main storage device, a series of setup instructions must be executed to load into address registers the starting address of each vector to be called out of the main storage device; and, since each vector consists of a chain of data, the vector length must be stored in a vector length register to control the transfer of the proper number of elements.

With such a system as described above, a problem occurs when the length of the vectors to be transferred from the main storage device exceeds the storage capacity of the vector registers. Under such circumstances, vector processing must be effected in two or more steps in which part of each vector is transferred to the vector registers and processed, and then another portion of each vector is transferred and processed, and so forth until each vector has been fully transferred and processed. In the prior art, these successive operations have been performed entirely by software, so that subsequent to each transfer and processing of partial vectors, a calculation must be performed to determine if further vector portions still remain to be transferred and processed, and, if so, the initial setup instructions must be executed again to calculate and store the starting addresses of those remaining vector portions.

Unfortunately, the need to repeat the setup instructions for each set of partial vectors places an undesirable limit on the speed of vector processing. Thus, in situations where the number of vectors is great and the vectors are multidimensional, the vector length can exceed the available storage capacity of the vector registers by a large number of times. Under such circumstances, the operating speed of the system becomes severly limited.

## SUMMARY OF THE INVENTION

To the end of eliminating the problem of the prior art described above, this invention has for its object to provide a vector processor which executes a setup instruction series only once in one vector operation, thereby making it possible to enhance the speed of vector operations.

A vector processor according to this invention comprises a circuit which, in case of executing a vector operation involving the number of elements $k$ greater than the vector register length $\ell$, detects the necessity for the repetition of a vector operation after $\ell$ elements have been processed by one vector instruction series, and a circuit which causes the vector instruction series to be repeatedly executed in accordance with an output of the first-mentioned circuit, thereby making it unnecessary to execute setup instructions many times.

## BRIEF DESCRIPTION OF THE DRAWINGS

Figure 1 is a diagram showing a prior art vector processor with vector registers;

Figure 2 shows examples of vector instructions which are used in the vector processor of Figure 1;

Figure 3 is a diagram showing a general instruction processing flow based on a prior art system;

Figure 4 is a diagram showing an example of a concrete instruction processing flow based on the prior art system;

Figure 5 is a diagram showing an example of a concrete instruction processing flow according to this invention;

Figure 6 is a diagram showing the circuit arrangement of the essential portions of a vector processing according to this invention;

Figure 7 is a diagram showing an example of instruction series which are used in this invnetion; and

Figure 8 is a diagram showing another example of instruction series which are used in this invention.

## DESCRIPTION OF THE PREFERRED EMBODIMENTS

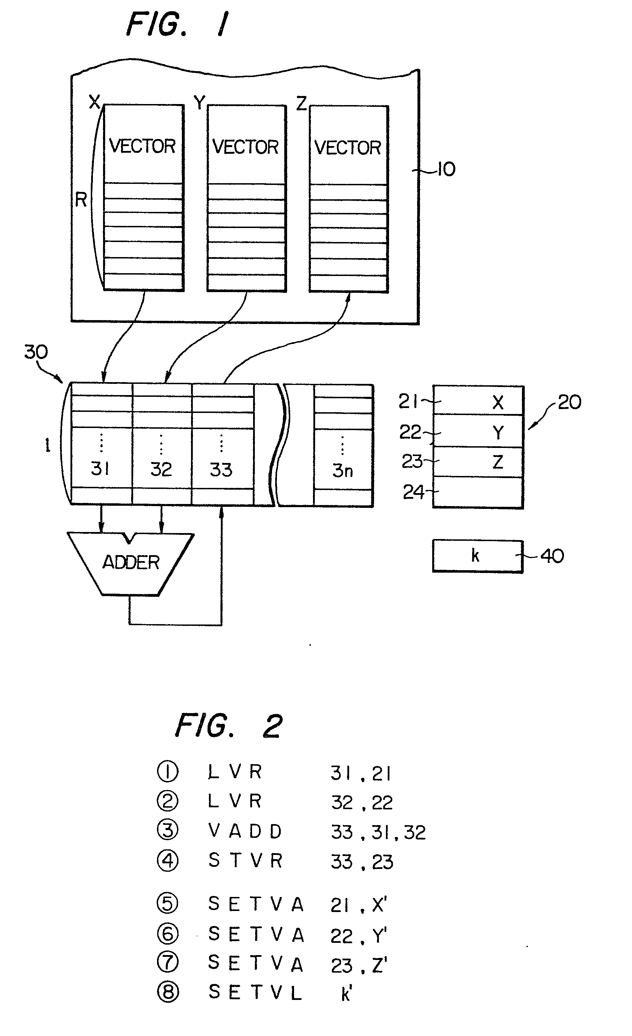

Prior to specific description of the preferred embodiments, a more specific example of the prior art will be described in conjunction with Figures 1 to 4.

An LVR (Load Vector Register) instruction fetches an address stored in a vector address register 20 assigned by the particular instruction, fetches from a main storage device 10 a chain of data (vector) beginning with the address, and transfers the data to a position in a vector register 30 assigned by the particular instruction. By way of example, an LVR instruction ① in Figure 2 transfers to a vector register 31 a vector which begins with an address, e.g., X of the main storage device 10 assigned by a vector address register 21. Similarly, an LVR instruction ② transfers to a vector register 32 a vector which begins with an address, e.g., Y of the main storage device 10 assigned by a vector address register 22.

On the other hand, a VADD (Vector ADD) instruction sequentially adds respectively corresponding data (vector elements) in vector registers assigned secondly and thirdly among three vector registers assigned by the particular instruction, and sequentially stores the added results into the vector register assigned in the first place. By way of example, a VADD instruction ③ in Figure 2 adds vectors in the vector registers 31 and 32 and stores the added result into a vector register 33.

An STVR (Store Vector Register) instruction is an instruction which transfers data within the vector register 30 to the main storage device 10. By way of example, an STVR instruction ④ in Figure 2 stores a vector within the vector register 33 into the position of the main storage device 10 assigned by an address Z within an address register 23.

After all, the four instructions ① - ④ as indicated in Figure 2 are used in order to add the vectors within the main storage device 10 beginning with the addresses X and Y respectively and to store the result into the address Z in the main storage device 10. Actually, before the series of these vector instructions is executed, it is necessary to process a setup instruction series including instructions SETVA (⑤ - ⑦ in Figure 2) for setting the addresses X, Y and Z into the vector address registers 21, 22 and 23 respectively and an instruction SETVL ( ⑧ in Figure 2) for setting the number of vector elements to be operated, $\underline{k}$ into a vector length register 40. X', Y' and Z' in the SETVA instructions ⑤ - ⑦ indicate indirect addresses for

- 5 -                                    **0044563**

fetching the addresses X, Y and Z from the main storage device, respectively. Similarly, k' in the SETVL instruction (8) indicates an indirect address for fetching the number of vector elements $\underline{k}$ from the main storage device. Although the series of these setup instructions consists only of four steps in Figure 2, the number of steps increases according to the number of vectors required for an operation. Moreover, in the case where a program is described in a high-class language and where vectors are multidimensional, the calculation of vector addresses themselves requires several steps--ten odd steps, and necessary setup instructions consist of 20 - 30 steps on the average ordinarily and can exceed 100 steps in the case of a large number of instructions.

Here, the number of elements of vectors to be operated on (hereinbelow, called the "vector length") is denoted by $\underline{k}$, and the number of vector elements storable in one vector register (hereinbelow, called the "vector register length") is denoted by $\ell$. The vector length $\underline{k}$ greatly varies depending upon the programs, but it can usually reach 10 to 10,000 or more. On the other hand, the vector register length $\ell$ has its upper limit determined by restrictions in the hardware of a processor to be utilized. The length $\ell = 64$ in the foregoing processor CRAY-1 by way of example. Thus, if $k \leq \ell$, necessary processings can be completed by one vector operation, whereas when $k \geq \ell$, other measures are needed to accommodate the excessive length of the vector.

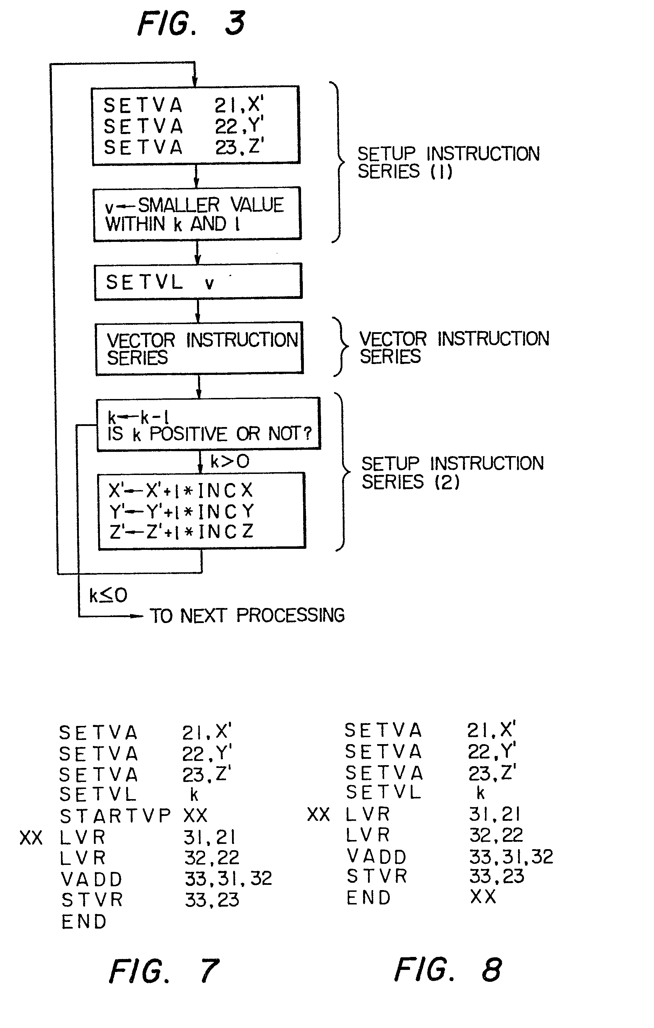

In a prior art vector processor, the solution to this problem has relied entirely on the software. That is, since only a number of vector elements equal to the vector register length $\ell$ can be processed, the vector instruction series indicated in Figure 1 needs to be subjected to processings as shown in Figure 3.

- 6 -                    0044563

First, a setup instruction series (1) is processed. More specifically, the vector addresses X, Y and Z are respectively set into the vector address registers 21 - 23 by the three SETVA instructions. Subsequently, the number $k$ of elements to be originally processed and the number $l$ of elements allowed to be processed at one time are compared, and a smaller value $v$ is set into the vector length register 40 by the SETVL instruction as a vector length to be processed. In the next place, the vector instruction series is executed. Thereafter, the setup instruction series (2) is processed. More specifically, when in case of $k > l$, one vector-instruction series has been executed, the processing of $l$ elements ends. Therefore, a value obtained by subtracting $l$ from $k$ is set into the vector length register 40 as $k$, and whether or not vector elements to be processed are left is checked. When $k$ is zero or negative, there is no vector element to be processed, and hence, the processing flow proceeds to the next processing. In contrast, when $k$ is positive, the vector elements to be processed remain, and hence, the vector addresses X, Y and Z are respectively increased so as to assign the elements next to the processed vector elements. Here, the vector addresses are increased to the amounts of the products between the vector length $l$ and the vector intervals INCX, INCY and INCZ of the respective vectors in the addresses X, Y and Z of the main storage. Subsequently, in order to set the respective values into the vector address registers 21, 22 and 23 again, the processing flow branches to the portion where the SETVA instructions are issued. As understood from the above, concerning the initial vector length $k$ to be processed, the processings are repeated $m$ times until $k - m \cdot l \leq l$ holds, and lastly, the vector operation of $(k - m \cdot l)$ elements is executed to end the processings originally required. Meantime, the setup instruction series (1) and (2) are repeatedly run, so that the processing speed lowers.

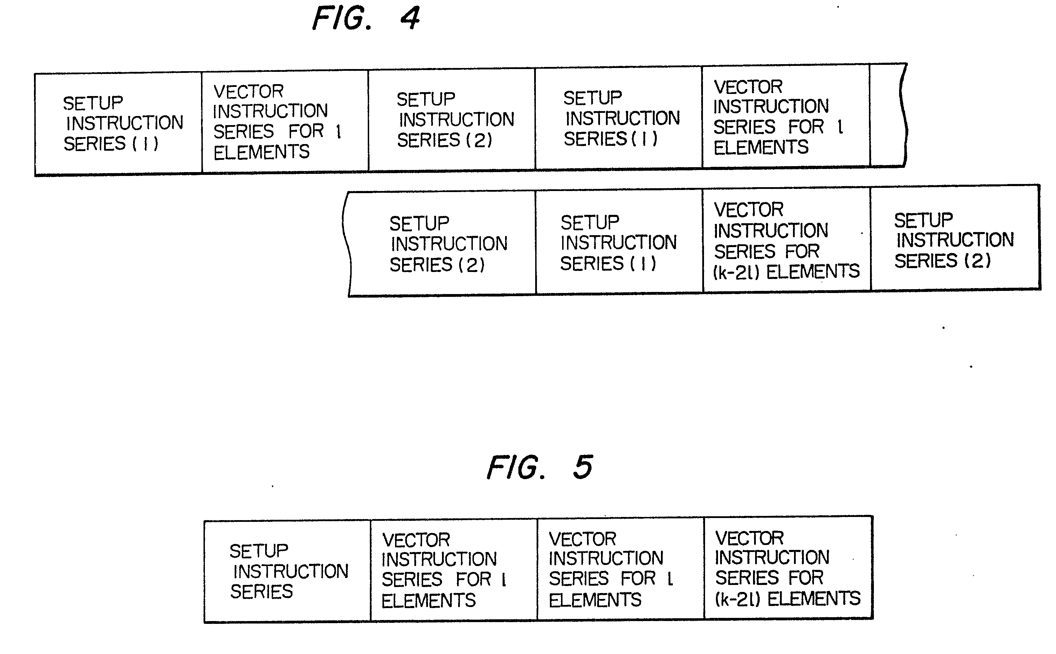

The circumstances are shown in Figure 4. The figure illustrates the situation at the time when, in the prior art vector processor, vectors of k = 150 have been processed with vector registers of $l$ = 64. The operations of $l$ elements are executed by the two vector instruction series, and the operation of the remaining (k - 2$l$) elements is executed by the next vector instruction series. The setup instruction series (1) and (2) are used for these operations three times. When the vector length k is great, the setup instruction execution time cannot be neglected because the setup instruction series are executed many times. Moreover, as stated previously, when the number of vectors increases and the vectors are multidimensional, the setup instruction series requires an increasingly larger number of steps per setup. On the other hand, the execution of the vector instruction series is, per se, made at very high speed by disposing a plurality of arithmetic units to execute operations in parallel and by adopting even in each arithmetic unit a measure such as the so-called operating pipeline which executes operations of a large number of data at high speed. Since, however, the setup instructions are executed a plurality of times, it is difficult to render the speed of the vector operations high.

In accordance with the present invention, the vector processings of the same values of the lengths k and $l$ as in the example shown in Figure 4 can be executed by three successive vector instruction series following a single setup instruction series, as illustrated in Figure 5.

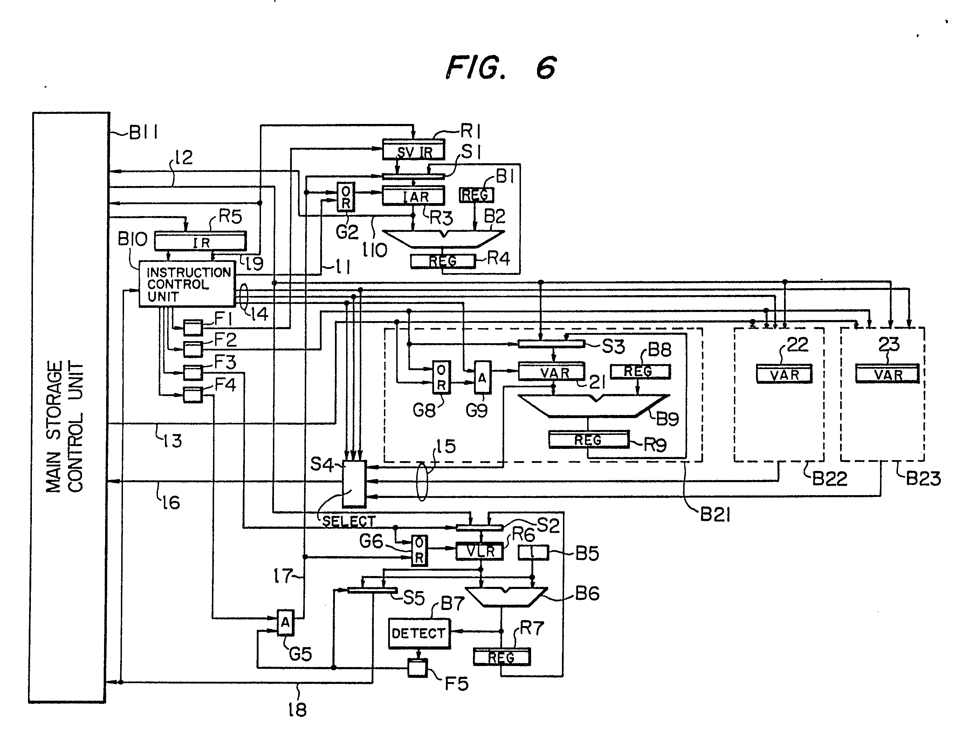

Figure 6 shows the circuit arrangement of the instruction executing portions in a vector processor according to this invention. In the ordinary fetch and execution of instructions, the vector processor operates as follows. The address of an instruction to be fetched is transmitted from an instruction address register (hereinbelow, abbreviated to "IAR") R3 to a main storage control unit B11, which fetches the instruction from a main storage device (not shown) and sets it into an instruction register (hereinbelow, abbreviated to "IR") R5. An instruction control unit B10 decodes the instruction, and controls the execution thereof. Meanwhile, the address in the IAR R3 is added in an adder B2 with an instruction length assigned by an instruction length register B1, and the result is set into a register R4. When the execution of the instruction has been started, a signal $\ell_1$ for updating the content of the IAR R3 is provided from the instruction control unit B10 and is applied to the IAR R3 through an OR gate G2. In response to the "update" signal $\ell_1$, the IAR R3 stores the output of a selector S1. Usually, a "select" signal $\ell_7$ is "0", so that the selector S1 selects the content of the register R4. The content of the IAR R3 is transmitted to the main storage control unit B11 through a line $\ell_{10}$, and the next instruction is fetched and set into the IR R5. In this way, the instructions are successively fetched and executed.

It is now supposed that the instruction series as shown in Figure 7 is executed. In the instruction series, SETVA instructions and a SETVL instruction are the same as in Figure 2. A STARTVP instruction is an instruction for assigning the head address of a vector instruction series to be repeated. Here, an address XX where the ensuing LVR instruction exists is assigned. After the address XX, the same instruction series as in Figure 2, including the LVR instructions, etc., is stored. The last instruction of the instruction series, i.e., END instruction is an instruction indicating the end of the vector instruction series. When this instruction has been executed and it has been decided that the vector instruction series needs to be repeatedly processed, the vector instruction series which begins with the address XX assigned by the STARTVP instruction is repeatedly executed.

The circumstances of execution of these instructions will now be described.

First, the instruction SETVA 21, X' is fetched from the main storage control unit B11 and is set into the IR R5. The instruction

control unit B10 decodes the operation code of this instruction by means of a decoder (not shown) disposed therein. Upon determining that the instruction within the IR R5 is the SETVA instruction, the unit B10 sets a flip-flop (FF) F2. In addition, the indirect address X' within the address field of this instruction is transmitted to the main storage control unit B11 through a line $\ell_9$. Under the control of this unit and with the indirect address X', the main storage device is accessed, from which the address X is fetched to a line $\ell_2$.

All of vector address register circuits (hereinbelow, "VAR circuits"), B21, B22 and B23 have an identical circuit structure, which consists of a vector address register (hereinbelow, "VAR") and circuitry for controlling the value of the VAR. The set output of the FF F2 is applied to selectors S3 of the VAR circuits B21 – B23 in common, and is also applied to AND gates G9 through OR gates G8. The selectors S3 select the line $\ell_2$ in response to the set output of the FF F2. On the other hand, the instruction control unit B10 has a circuit (not shown) which, when the instruction within the IR is the SETVA instruction, decodes the data "21" within the VAR assigning field of the instruction and continues to transmit a register assigning signal $\ell_4$ for selectively starting the corresponding one of the VAR circuits B21 – B23. Since the register assigning signal $\ell_4$ is applied to the AND gate G9 in the VAR circuit B21, the gate G9 is enabled, so that the set signal of the FF F2 is supplied to the VAR 21 in the VAR circuit B21 and that the vector address "X" on the line $\ell_2$ is stored into the VAR 21. In contrast, the other VAR circuits B22 and B23 are not supplied with the register assigning signal $\ell_4$, so that the content of the VAR 22 or 23 thereof is not updated. In this way, the address "X" is stored into the VAR 21 of the VAR circuit B21 by the instruction SETVA 21, X'. After the end of the execution of this instruction, the FF F2 is reset.

Thereafter, the vector addresses Y and Z are respectively set in the VARs 22 and 23 in the VAR circuits B22 and B23 by the instructions SETVA 22, Y' and SETVA 23, Z' in the same manner. The output of each of the VARs 21 - 23 is transmitted to the main storage control unit B11 through a line $\ell_6$ as well as a selector S4 which operates so that the output of the VAR assigned by the register assigning signal $\ell_4$ may be selected.

Subsequently, when the instruction SETVL k' has been set in the IR R5, the instruction control unit B10 decodes the operation code of this instruction by means of the decoder and sets an FF F3 upon determining that the instruction is the SETVL instruction. The indirect address k' in this instruction is transmitted through the line $\ell_9$ to the main storage control unit B11, from which the number of vector elements $\underline{k}$ is fetched onto the line $\ell_2$ in the same manner as in the case of the SETVA instruction.

A selector S2 selects the data line $\ell_2$ in response to the set output of the FF F3. Further, the output of the selector S2 is applied to a vector length register VLR R6. Since the VLR R6 is supplied with the set output of the FF F3 through an OR gate G6, it stores the output of the selector S2. The difference $(k - \ell)$ between the content $\underline{k}$ of the VLR R6 and the vector register length stored in a vector register length-register B5 beforehand is evaluated by a subtracter B6, the output of which is stored in a register R7 and is also applied to a plus detector B7. The plus detector B7 sets an FF F5 when its input is positive, and resets the same when its input is negative or zero. A selector S5 selects one of a smaller value between the contents of the VLR R6 and the register B5. That is, the selector S5 selects either the VLR R6 or the vector register length-register B5, depending upon whether the output of the FF F5 is a set output or a reset output. The value selected by the selector S5 is transmitted to the instruction

0044563

control unit B10 and the main storage control unit B11 through a line $\ell_8$, and is used for the run of the subsequent vector instructions. Immediately after the number of vector elements $\underline{k}$ has been set into the VLR R6 by the SETVL k' instruction, $\ell$ or $\underline{k}$ is delivered to the line $\ell_8$ in accordance with $k > \ell$ or $k \leq \ell$, respectively. The data on the line $\ell_8$ is applied to the main storage control unit B11 in order to access the number of elements for the subsequent vector processings. The data on the line $\ell_8$ is also transmitted to the instruction control unit B10 in order to control the processings of this number of vector elements.

When the execution of the SETVL k' instruction has ended, the FF F3 is reset. On the other hand, the FF F5 is set or reset each time the subsequent instruction is executed, in accordance with the output of the plus detector B7 at that time. Such circuit arrangement dispenses with the process of obtaining as $\underline{v}$ the smaller value between $\underline{k}$ and $\ell$ in the setup instruction series (1) of the prior art illustrated in Figure 3, as will be seen from the following description.

Subsequently, when the instruction STARTVP XX has been set in the IR R5, the decoder of the instruction control unit B10 decodes this instruction and sets an FF F1 upon determining that it is the STARTVP instruction. In addition, the data "XX" within the address field of this instruction is applied to a start vector instruction register (hereinbelow, "SVIR") R1 through the line $\ell_9$. The SVIR R1 stores the address data "XX" in response to the set output of the FF F1.

When the next instruction LVR 31, 21 has been set in the IR R5, decoded by the instruction control unit B10 and brought into execution, the vector address in the VAR 21 is transmitted to the main storage control unit B11 and is used for the fetch of vector data. On the other hand, the vector address X within the VAR 21 assigned by the data "21" within the address field of this instruction is added in an adder B9 with the content of a register B8 indicating a vector element fetching interval, and the result is set in a register R9. It is also possible to permit the content of the register B8 to be altered by an instruction. When, in response to the data "21" within the address field of the instruction, the instruction control unit B10 has provided the updating signal $\ell_3$ for the VARs 21 - 23 and the register assignment signal $\ell_4$ for assigning the VAR 21, the content (indicating the vector address to be subsequently fetched) of the register R9 in the VAR circuit B21 is stored in the VAR 21 via the selector S3. The selector S3 selects the register R9 because the FF F2 is in the reset state. Using the address set in the VAR 21 anew, the next vector is fetched. Such operations are successively repeated to fetch vector elements from the main storage and to store them into a vector register (not shown) corresponding to the data "31" within the address field of this instruction. The number of vector elements to be fetched is equal to the value which has previously been applied from the selector S5 to the main storage control unit B11 through the signal line $\ell_8$. Accordingly, when the number of vector elements $\underline{k}$ is greater than the vector register length $\ell$, the number of vector elements to be fetched is equal to $\ell$, and in the other cases, the number is equal to $\underline{k}$.

Regarding the next instruction LVR 32, 22, the VAR 22 is similarly used, and vector elements beginning with the address Y are stored into a vector register (not shown) corresponding to the address data "32" within this instruction.

When the next instruction VADD 33, 31, 32 is executed, the contents of vector registers corresponding to the second and third address data "31" and "32" of this instruction are added, and the added result is stored into a vector register (not shown) corresponding to the first address data "33" of this instruction. Since the operations of the device at this time are the same as in the prior art, they are not explained in detail.

When the next instruction STVR 33, 23 is executed, the content of the vector register corresponding to the first address "33" of this instruction is stored into a position within the main storage device corresponding to the second address data "23" of this instruction, that is, into an area beginning with the address "Y" in the VAR 23 corresponding to the second address data "23". The updating of the VAR 23 at the storing operation is controlled by the instruction control unit B10 as in the case of the LVR instruction.

When the executions of the LVR instructions and the STVR instruction have ended in this way, the VARs 21 - 23 have had their contents updated. That area of the main storage device from or into which data is read or written when the LVR and STVR instructions are thereafter executed again is an area adjacent to the area accessed with the VAR circuits before. As a result, the processings of calculating the increments of the vector addresses in the setup instruction series (2) of the prior art illustrated in Figure 3 are dispensed with.

When the vector instructions have been successively processed and the END instruction indicating the last of the instruction series has been set in the IR R5 to be decoded and brought into execution similar to the other instructions by the instruction control unit B10, a flip-flop F4 indicative of the END instruction is set. The output of the flip-flop F4 and the output of the flip-flop F5 for storing the output of the plus detector B7 are applied to an AND gate G5. When the number of vector elements $k$ set in the VLR R6 by the SETVL instruction is greater than the vector register length $\ell$, the FF F5 is set by the SETVL instruction, so that the output signal $\ell_7$ of the AND gate G5 becomes "1" at the decoding of the END instruction. When the signal $\ell_7$ has become "1", the control of the selector S1 is first switched, and the content "XX" of the SVIR R1 is selected by the selector S1 and set into the IAR R3. This setting is effected by the signal $\ell_7$ received through the OR gate G2.

Since the FF F3 for controlling the selector S2 remains reset, the selector S2 selects the register R7. The value of (vector element length $\underline{k}$ – vector register length $\ell$) in the register R7 selected by the selector S2 is set into the VLR R6. The setting of the VLR R6 is effected by the signal $\ell_7$ received through the OR gate G6. Thus, the head address "XX" of the vector instructions to be repeated lies in the IAR R3, while the number $(k - \ell)$ of the remaining vector elements to be processed lies in the VLR R6. The execution of the vector instruction series is permitted again. Thereafter, the vector instruction series of from the LVR 31, 21 to the END instruction is executed under the control of the instruction control unit B10. When, after the end of the execution, the value $(k - \ell)$ of the VLR R6 is greater than $\ell$, the instructions of from the LVR 31, 21 to the END instruction are repeated again. Thereafter, similar operations are carried out until the value of the VLR R6 becomes smaller than $\ell$ to prevent the FF F5 from being set.

The above description has referred to the system wherein the start instruction of the vector instruction series to be repeatedly executed is assigned by the STARTVP instruction. Besides, a system is considered wherein as shown in Figure 8, the address XX of the start instruction of the vector instruction series to be repeatedly executed is indicated by the END instruction without using the STARTVP instruction. In this case, the address XX may be set into the SVIR R1 by the end instruction, and the arrangement of Figure 6 scarcely needs to be altered in the other points.

As set forth above, according to this invention, even in the operation of vectors of a length greater than the number of vector elements storable in a vector register, the setup of vector addresses and a vector length into vector address registers and a vector length register can be made once, so that wasteful processings ascribable to repeating the setups many times are dispensed with to make it possible to execute the vector operation efficiently.

Patent Claims

1. A vector processor including at least one vector register (30) and a main storage device (10) for storing vectors comprising:

a first register (R6) for storing a signal value corresponding to the vector length in terms of vector elements of a vector to be processed by a vector instruction;

a second register (B5) for storing a signal value corresponding to the length of said vector register (30) which is used for storing vectors during vector processings based on said vector instruction;

detecting means (B7) coupled with said first and second registers for detecting whether or not said vector length as stored in said first register (R6) is greater than the vector register length as stored in said second register (B5);

selecting means (S5) coupled with said first and second registers (R6, B5) for selecting the smaller one between said vector length signal value and said vector register length signal value;

subtracting means (B6) coupled with said first and second registers (R6, B5) for subtracting said vector register length signal value from said vector length signal value;

a plurality of vector address register circuits (B21... B23), each including a vector address register (21...23) for storing an address of a vector element in said main storage device (10) and means (B8, B9) for incrementing the content of said vector address register (21...23) in synchronism with the processing of the vector elements of a vector as it is stored in said vector register (30);

instruction control means (B10) for controlling execution of vector instructions, including means for operating selective vector address register circuits (B21...B23) corresponding to the respective vector instructions in response to said respective vector instructions within a vector instruction series;

main storage control means (B11) for effecting the storing in said main storage (10) of vector elements equal to the length signal value at the output of said selection means (S5) from storage locations corresponding to the vector addresses  delivered from said vector address register circuit (B21...B23);

means for controlling the sequence of the execution of the vector instructions so that when the processings have ended for the respective instructions other than the last vector instruction of said vector instruction series, the next vector instruction may be executed, and when the processings have ended for said last vector instruction, the first vector instruction of said vector instruction series may be executed provided said detecting means indicates that said vector length is greater than said vector register length; and

storing means (R7, S2) to store an output of the subtracting means (B6) in said first register (R6) when said processings have ended for said last vector instruction, under the condition that said detection means (B7) indicates that said vector length is greater than said vector register length.

2. A vector processor according to claim 1, wherein said detecting means (B7) detects whether or not said vector length is greater than said vector register length in response to the output of said subtracting means (B6).

3. A vector processor according to claim 1 or 2, wherein said selecting means (S5) responds to the output of said detecting means (B7).

4. A vector processor according to claim 1, wherein the storing means includes a third register (R7) which stores said output of said subtracting means (B6), a data selector (S2) responsive to said instruction control means for selecting either of an initial signal value of the vector length delivered in response to a predetermined set instruction or an output of said third register (R7), and means to control said data selector (S2) so as to select said initial value in response to said instruction control means responding to said set instruction and to select said output of said third register (R7) when said processings of said last vector instruction have ended.

5.    A vector processor according to claim 1 or claim 4, wherein the sequence control means includes an instruction address register (R3) which stores the address of an instruction to be subsequently executed, means (R1) to store the address of the first vector instruction of said vector instruction series, means (B1, B2) to generate an incremented address from the content of said instruction address register (R3), means (R4) to store the incremented address, an address selector (S1) which selects either an output of the first address storing means (R1) or an output of the incremented address storing means (R4), and means (G5) to control said address selector (S1) so that when the processings for the vector instructions other than the last vector instruction have ended, said output of said incremented address storing means (R4) may be selected, and when the processings for said last vector instruction have ended and the detection means (B7) indicates that said vector length is greater than said vector register length, the first address may be selected.

6.    A vector processor according to claim 5, wherein said sequence control means includes means to store said first address in said first address storing means (R1) in response to a predetermined set instruction executed prior to the vector instruction series.

7. A vector processor according to claim 5, wherein said sequence control means includes means to store said first address in said first address storing means (R1) in response to a predetermined end instruction executed after the last vector instruction.

8. A vector processor according to claim 1, wherein the incrementing means within said vector address register circuit (B21) includes means to set an initial value into said vector address register (21) in response to a predetermined set instruction, means (B8, B9) to deliver a value with a predetermined number added to the content of said vector address register (21), means (R9) to store the added result, and means (S3) to set an output of the storing means (R9) into said vector address register (21) in response to a start signal from said instruction control means (B10).

9. In a system including at least one vector register (30) for storing a vector formed of a plurality of vector elements and a main storage device (10) for storing a plurality of vectors, a vector processor for effecting transfer of a selected vector from said main storage device (10) to said vector register (30) and processing of said vector in response to a series of vector instructions comprising:
a first register (R6) for storing a signal value corresponding to the vector length in terms of vector elements of a vector to be processed by a vector instruction;

a second register (B5) for storing a signal value corresponding to the length of said vector register in terms of the number of vector elements it can hold;

subtracting means (B6) coupled to said first and second registers (R6, B5) for subtracting said vector register length signal value from said vector length signal value;

detecting means (B7) for detecting whether or not said vector length as stored in said first register (R6) is greater than the vector register length as stored in said second register (B5);

first selecting means (S5) coupled to said first and second registers (R6, B5) and responsive to the output of said detecting means (B7) for selecting the smaller one between said vector length signal value and said vector register length signal value;

second selecting means (S2) for storing the output of said subtracting means (B6) in said first register (R6) in response to execution of the last vector instruction of said series provided said detecting means (B7) indicates that said vector length is greater than said vector register length;

a vector address register circuit (B21) including a vector address register (21) for storing an address in said main storage device (10) at which a vector element of a vector to be processed is located and means (B8, B9) for incrementing the content of said vector address register (21) in synchronism with the processing of the vector elements of a vector as it is stored in said vector register (30);

sequence control means for controlling the sequence of the execution of the vector instructions so that when the processings have ended for the respective instructions other than the last vector instruction of said series, the next vector instruction may be executed, and when the processings have ended for said last vector instruction and said detecting means (B7) indicates that said vector length is greater than said vector register length, the first and subsequent vector instructions may be executed once again;

main storage control means (B11) responsive to the output of said first selecting means (S5) and the address stored in said vector address register (21) for effecting the storing in said main storage device (10) of a number of vector elements equal to the smaller of said vector length and said vector register length from storage locations corresponding to the vector addresses supplied by said vector address register (21); and

instruction control means (B10) for controlling execution of vector instructions including first means (F2) responsive to a vector instruction for storing in said vector address register (21) the address of the first vector element of a vector to be processed, second means (F3) responsive to a vector instruction for storing in said first register (R6) an initial signal value corresponding to the length of said vector to be processed, third means (F1) responsive to a vector instruction for forwarding to said sequence control means the address of the first vector instruction of said series, and fourth means (F4) responsive to the last vector instruction of said series for operating said second selecting means (S2) and effecting recycling of said sequence control means when said detecting means indicates that said vector length is greater than said vector register length.

10. A vector processor according to claim 9, wherein said detecting means (B7) is connected to the output of said subtracting means (B6) and includes a flip-flop (F5) which indicates when said vector length is greater than said vector register length.

11. A vector processor according to claim 10, further including a third register (R7) connected to said subtracting means (B6) to store the output thereof, said second selecting means (S2) having a first input connected to said main storage control means (B11) to receive said initial signal value, a second input connected to the output of said third register (R7) and a control input connected to said second means (F3) for connecting one of said first and second inputs thereof to the input of said first register (R6).

0044563

- 23 -

12. A vector processor according to claim 11, further including an AND gate (G5) having inputs connected to said fourth means (F4) in said instruction control means (B10) and the output of said flip-flop (F5) in said detecting means (B7), the output of said AND gate (G5) being coupled to said first register (R6) and said sequence control means to effect operation thereof.

13. A vector processor according to claim 12, wherein said sequence control means includes an instruction address register (R3) for storing an instruction address, means (B1, B2) for incrementing said instruction address in response to said instruction control means (B10), a starting vector instruction register (R1) for storing the starting address of a vector in response to the third means (F1) of said instruction control means (B10), and a third selecting means (S1) responsive to the output of said AND gate (G5) for storing the starting address from said starting vector instruction register (R1) in said instruction address register.

14. A vector processor according to claim 13, wherein the incrementing means within said vector address register circuit (B21) includes means to set an initial value into said vector address register (21) in response to a predetermined set instruction, means (B8, B9) to deliver a value with a predetermined number added to the content of said vector address register (21), means (R9) to store the added result, and means (S3) to set an output of the storing means (R9) into said vector address register (21) in response to a start signal from said instruction control means (B10).

# FIG. 1

# FIG. 2

① L V R      31 , 21
② L V R      32 , 22
③ V A D D    33 , 31 , 32
④ S T V R    33 , 23

⑤ S E T V A  21 , X'
⑥ S E T V A  22 , Y'
⑦ S E T V A  23 , Z'
⑧ S E T V L  k'

## FIG. 3

```
┌──────────────────────┐
│  SETVA    21,X'      │
│  SETVA    22,Y'      │   ⎫
│  SETVA    23,Z'      │   │
└──────────────────────┘   │  SETUP INSTRUCTION
          │                │  SERIES (1)
┌──────────────────────┐   │
│  v←SMALLER VALUE      │   │
│  WITHIN k AND l      │   ⎭
└──────────────────────┘
          │
┌──────────────────────┐
│  SETVL  v            │
└──────────────────────┘
          │
┌──────────────────────┐   ⎫
│  VECTOR INSTRUCTION  │   │  VECTOR INSTRUCTION
│  SERIES              │   │  SERIES
└──────────────────────┘   ⎭
          │
┌──────────────────────┐   ⎫
│  k←k-l               │   │
│  IS k POSITIVE OR NOT?│   │
└──────────────────────┘   │
          │ k>0            │  SETUP INSTRUCTION
┌──────────────────────┐   │  SERIES (2)
│  X'←X'+l*INCX        │   │
│  Y'←Y'+l*INCY        │   │
│  Z'←Z'+l*INCZ        │   ⎭
└──────────────────────┘

  k≤0
   └──→ TO NEXT PROCESSING
```

```
         SETVA     21,X'                  SETVA     21,X'
         SETVA     22,Y'                  SETVA     22,Y'
         SETVA     23,Z'                  SETVA     23,Z'
         SETVL     k                      SETVL     k
         STARTVP XX            XX  LVR       31,21
    XX   LVR       31,21                LVR       32,22
         LVR       32,22                VADD      33,31,32
         VADD      33,31,32             STVR      33,23
         STVR      33,23                END       XX
         END
```

## FIG. 7                    ## FIG. 8

## FIG. 4

| SETUP INSTRUCTION SERIES (1) | VECTOR INSTRUCTION SERIES FOR l ELEMENTS | SETUP INSTRUCTION SERIES (2) | SETUP INSTRUCTION SERIES (1) | VECTOR INSTRUCTION SERIES FOR l ELEMENTS |
|---|---|---|---|---|

| SETUP INSTRUCTION SERIES (2) | SETUP INSTRUCTION SERIES (1) | VECTOR INSTRUCTION SERIES FOR (k-2l) ELEMENTS | SETUP INSTRUCTION SERIES (2) |
|---|---|---|---|

## FIG. 5

| SETUP INSTRUCTION SERIES | VECTOR INSTRUCTION SERIES FOR l ELEMENTS | VECTOR INSTRUCTION SERIES FOR l ELEMENTS | VECTOR INSTRUCTION SERIES FOR (k-2l) ELEMENTS |
|---|---|---|---|

3/4

0044563

FIG. 6

## European Patent Office

## EUROPEAN SEARCH REPORT

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| | IBM TECHNICAL DISCLOSURE BULLETIN, vol. 13, no. 12, May 1971, pages 3804-3805 New York, U.S.A. L.M. MOSS et al.: "Processing vectors as a plurality of segments"  * Page 3804, line 1 - page 3805, line 37; figures *  ---- | 1-5,9-11 | G 06 F 15/347 9/34 |
| | | | TECHNICAL FIELDS SEARCHED (Int. Cl.³) |
| | | | G 06 F 15/347 9/34 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family corresponding document

The present search report has been drawn up for all claims

| Place of search | Date of completion of the search | Examiner |
|---|---|---|
| The Hague | 29-10-1981 | BURGAUD |